# EUROPÄISCHE PATENTSCHRIFT

(11) **EP 2 350 751 B1**
(45) Veröffentlichungstag und Bekanntmachung des Hinweises auf die Patenterteilung: **06.01.2016**
(21) Anmeldenummer: 09778622.2
(22) Anmeldetag: 21.09.2009
(51) Int. Cl.: G05B 19/416, E05F 15/00, H02P 5/00, H02P 5/68

(54) **ANTRIEBSANORDNUNG ZUR MOTORISCHEN VERSTELLUNG EINES VERSTELLELEMENTS IN EINEM KRAFTFAHRZEUG**
DRIVE ASSEMBLY FOR MOTORIZED ADJUSTING OF AN ADJUSTING ELEMENT IN A MOTOR VEHICLE
UNITÉ D'ENTRAÎNEMENT POUR LE DÉPLACEMENT MOTORISÉ D'UN ÉLÉMENT À DÉPLACEMENT DANS UN VÉHICULE À MOTEUR

(30) Priorität: 25.10.2008 DE 102008053113
(43) Veröffentlichungstag der Anmeldung: 03.08.2011
(73) Patentinhaber: Brose Fahrzeugteile GmbH & Co. KG, Hallstadt, 96103 Hallstadt (DE)
(72) Erfinder: EGGELING, Jürgen, 45475 Mülheim an der Ruhr (DE); DÜNNE, Klaus, 40882 Ratingen (DE); HELLMICH, Dirk, 47249 Duisberg (DE)
(74) Vertreter: Gottschald, Jan
(86) Internationale Anmeldenummer: PCT/EP2009/006789
(87) Internationale Veröffentlichungsnummer: WO 2010/046008

(56) Entgegenhaltungen:
- EP-A2- 1 746 715
- WO-A1-98/37297
- DE-A1- 4 041 087
- JP-A- 8 084 492
- US-A- 3 845 366
- US-A- 5 625 262
- US-A1- 2005 168 010
- Kurt Breckner: "Regel- und Rechenschaltungen in der Prozeßautomatisierung: Bewährte Beispiele aus der Praxis" In: "Regel- und Rechenschaltungen in der Prozeßautomatisierung: Bewährte Beispiele aus der Praxis", 31 January 1999 (1999-01-31), Oldenbourg Industrieverlag, XP055137854, ISBN: 978-3-83-564729-9 pages 318-320,

## Beschreibung

Die vorliegende Erfindung betrifft eine Antriebsanordnung zur motorischen Verstellung eines Verstellelements in einem Kraftfahrzeug gemäß dem Oberbegriff von Anspruch 1, eine Verstellelementanordnung in einem Kraftfahrzeug gemäß dem Oberbegriff von Anspruch 14 und ein Verfahren zur Ansteuerung einer obigen Antriebsanordnung gemäß dem Oberbegriff von Anspruch 16.

Der Begriff "Verstellelement" ist vorliegend umfassend zu verstehen. Entsprechend fallen hierunter jegliche Verstellelemente in einem Kraftfahrzeug wie eine Heckklappe, ein Heckdeckel, eine Motorraumklappe, eine Laderaumklappe, eine Seitentür - auch Schiebetür -, ein Ladeboden und ein Hubdach eines Kraft-fahrzeugs. Ferner sind hiervon beispielsweise motorisch verstellbare Scheiben, Spiegel oder Fahrzeugsitze umfasst.

Im Zuge der Komforterhöhung modernes Kraftfahrzeuge kommt der motorischen Verstellung der oben genannten Verstellelemente, beispielsweise der Heckklappe, eines Kraftfahrzeugs, wachsende Bedeutung zu. Hierfür ist eine Antriebsanordnung vorgesehen, die über einen Antriebsstrang mit dem jeweiligen Verstellelement gekoppelt ist.

Die bekannte Antriebsanordnung (EP 1 862 628 A1), von der die vorliegende Erfindung ausgeht, ist mit zwei elektrischen Antrieben ausgestattet. Die beiden Antriebe sind als Spindelantriebe ausgestaltet und weisen jeweils einen elektrischen Antriebsmotor mit nachgeschaltetern Spindel-Spindelmutter-Getriebe auf. Die beiden Spindelantriebe sind an den beiden Randseiten einer Heckklappe angeordnet und wirken jede für sich, jedoch in gleicher Weise, auf die Heckklappe ein. Beide Spindelantriebe sind entsprechend so angeordnet, dass sie bei gleichen Antriebskräften gleiche Antriebsmomente auf beiden Randseiten in die Heckklappe einleiten. Ähnliches zeigt die US 2005/0168010 A1.

Zur motorischen Verstellung der Heckklappe werden die beiden Spindelantriebe regelmäßig mit derselben Antriebsspannung beaufschlagt. Dabei wird davon ausgegangen, dass die Motorkennlinien der beiden Antriebsmotoren identisch sind.

Es hat sich allerdings in Versuchen gezeigt, dass die Motorkennlinien der in Rede stehenden Antriebsmotoren toleranzbedingten Unterschieden unterworfen sind. U.a. dies führt dazu, dass sich bei identischer Antriebsgeschwindigkeit und identischer Antriebsspannung unterschiedliche Antriebsströme und entsprechend unterschiedliche Antriebskräfte bzw. -momente einstellen. Der eine Antrieb wird also stets mehr elektrische Leistung aufnehmen und entsprechend mehr mechanische Leistung abgeben als der andere Antrieb. Dies führt regelmäßig dazu, dass der stets höher belastete Antrieb eine reduzierte Lebensdauer aufweist.

Es sind zwar verschiedene steuerungstechnische Ansätze für die Ansteuerung der in Rede stehenden Antriebsanordnung bekannt geworden. Als Beispiel hierfür sei eine Steuerungsvorrichtung genannt, bei der für jede Verstellphase des Verstellelements ganz bestimmte Steuer- und/oder Regelkonzepte Anwendung finden (EP 1 860 265 A2). Der Aspekt des ungleichmäßigen Verschleißes der beiden Antriebe wird allerdings auch dort nicht angesprochen.

Ferner ist es bekannt, die abgegebenen Drehmomente zweier gekoppelter Antriebe aneinander anzugleichen, insbesondere um mechanische Spannungen zu vermeiden (US 3,845,366, EP 1 746 715 A2, US 5,625,262, JP 08084492 A). Allerdings sind diese Verfahren bei toleranzbedingten Unterschieden zwischen den Antrieben wenig geeignet, da stets ein Rückschluss vom Motorstrom auf das jeweilige Drehmoment getroffen wird, der wiederum entsprechend toleranzbehaftet ist.

Der Erfindung liegt das Problem zugrunde, die bekannte Antriebsanordnung derart auszugestalten und weiterzubilden, dass die zu erwartende Lebensdauer für die beiden Antriebe trotz toleranzbedingter Unterschiede zwischen den Antrieben möglichst gleich ist.

Das obige Problem wird bei einer Antriebsanordnung gemäß dem Oberbegriff von Anspruch 1 durch die Merkmale des kennzeichnenden Teils von Anspruch 1 gelöst.

Um einen ungleichmäßigen Verschleiß der beiden Antriebe zu vermeiden, wird vorgeschlagen, die Steuerungseinrichtung mit einem Leistungsregler auszustatten, der sicherstellt, dass sich bei beiden Antrieben stets eine identische elektrische Leistungsaufnahme einstellt.

Dabei soll der Leistungsregler so ausgelegt sein, dass er die geringen, toleranzbedingten Abweichungen zwischen den beiden Antrieben ausgleicht. Es handelt sich hier also ausdrücklich um eine Feinregelung.

Wenn im folgenden von einer elektrischen Leistung, einem elektrischen Strom oder einer elektrischen Spannung die Rede ist, so ist stets die mittlere Leistung, der mittlere Strom oder die mittlere Spannung gemeint. Dies ist erwähnenswert, da die beiden Antriebe vorteilhafterweise mit pulsweitennodulierten (PWM-) Antriebsspannungen betrieben werden, so dass sich entsprechend gepulste elektrische Leistungs- und Stromwerte ergeben.

Bei der bevorzugten Ausgestaltung gemäß Anspruch 4 erzeugt der Leistungsregler jeweils einen Stellwert für die Antriebsspannungen der beiden Antriebe derart, dass sich bei beiden Antrieben in obiger Weise eine identische elektrische Leistungsaufnahme einstellt. Damit sind die Antriebsspannungen der beiden Antriebe je nach toleranzbedingter Abweichung unterschiedlich.

Bei der weiter bevorzugten Ausgestaltung gemäß Anspruch 6 ist es so, dass der Leistungsregler basierend auf den aktuellen Antriebsströmen und den aktuellen Antriebsspannungen der beiden Antriebe die Stellwerte für die beiden Antriebsspannungen erzeugt, und zwar so, dass sich die von den beiden Antrieben aufgenommenen elektrischen Leistungen in obigem Sinne einander annähern.

Bei der besonders bevorzugten Ausgestaltung gemäß Anspruch 7 ist der vorschlagsgemäße Leistungsregler einem Bewegungsregler zur Regelung insbesondere der Verstellgeschwindigkeit des Verstellelements nachgeschaltet. Dabei überführt der Leistungsregler den von dem Bewegungsregler erzeugten Stellwert in zwei separate, den beiden Antrieben zugeordnete Stellwerte derart, dass sowohl eine Bewegungsregelung als auch die Leistungsregelung in obigem Sinne gewährleistet ist.

Mit dem obigen Leistungsregler lassen sich die toleranzbedingten Abweichungen zwischen den Antrieben, soweit Unterschiede in den Motorkennlinien betroffen sind, auf einfache Weise ausgleichen.

Nach einer weiteren Lehre, der eigenständige Bedeutung zukommt, wird das obige Problem bei einer Verstellelementanordnung gemäß dem Oberbegriff von Anspruch 14 durch die Merkmale des kennzeichnenden Teils von Anspruch 14 gelöst.

Wesentlich nach dieser weiteren Lehre ist die Tatsache, dass die Verstellelementanordnung mit einer obigen, vorschlagsgemässen Antriebsanordnung ausgestattet ist. Auf die Ausführungen zu der vorschlagsgemässen Antriebsanordnung darf verwiesen werden.

Nach einer weiteren Lehre, der eigenständige Bedeutung zukommt, wird das obige Problem bei einem Verfahren zur Ansteuerung einer Antriebsanordnung gemäß dem Oberbegriff von Anspruch 16 durch die Merkmale des kennzeichnenden Teils von Anspruch 16 gelöst, wobei es sich bei der Antriebsanordnung insbesondere um eine obige, vorschlagsgemässe Antriebsanordnung handelt.

Wesentlich nach dieser weiteren Lehre ist die Tatsache, dass insbesondere während der motorischen Verstellung des Verstellelements die an die beiden Antriebe jeweils abgegebene elektrische Leistung zum Ausgleich der toleranzbedingten Abweichungen derart geregelt wird, dass sich bei beiden Antrieben eine identische elektrische Leistungsaufnahme einstellt. Auf die Ausführungen zu der vorschlagsgemässen Antriebsanordnung darf auch in diesem Zusammenhang verwiesen werden, soweit diese Ausführungen geeignet sind, das vorschlagsgemässe Verfahren zu erläutern.

Im folgenden wird die Erfindung anhand eines Ausführungsbeispiels näher erläutert. In der Zeichnung zeigt
- Fig. 1: in schematischer Darstellung das Heck eines Kraftfahrzeugs bei geöffneter Heckklappe mit einer vorschlagsgemäßen Antriebsanordnung in einer Seitenansicht,
- Fig. 2: in einem Blockdiagramm die Antriebsanordnung gemäß Fig. 1,
- Fig. 3: in einem Zeitdiagramm den Verlauf der Antriebsspannungen, der von den beiden Antrieben aufgenommenen elektrischen Leistungen und des Verstellwegs während des Öffnens der Heckklappe gemäß Fig. 1 und
- Fig. 4: in einem Zeitdiagramm gemäß Fig. 3 den Verlauf der Antriebsspannungen, der von den beiden Antrieben aufgenommenen elektrischen Leistungen und des Verstellwegs.

Die vorschlagsgemäße Antriebsanordnung dient der motorischen Verstellung eines Verstellelements 1 in einem Kraftfahrzeug. Die Zeichnung betrifft die Anwendung der Antriebsanordnung für ein als Heckklappe ausgestaltetes Verstellelement 1. Die ist zwar vorteilhaft, aber nicht beschränkend zu verstehen. Die folgenden Ausführungen betreffen daher fast durchweg ein als Heckklappe ausgestaltetes Verstellelement 1. Diese Ausführungen gelten in vollem Umfange auch für alle anderen Arten von Verstellelementen 1.

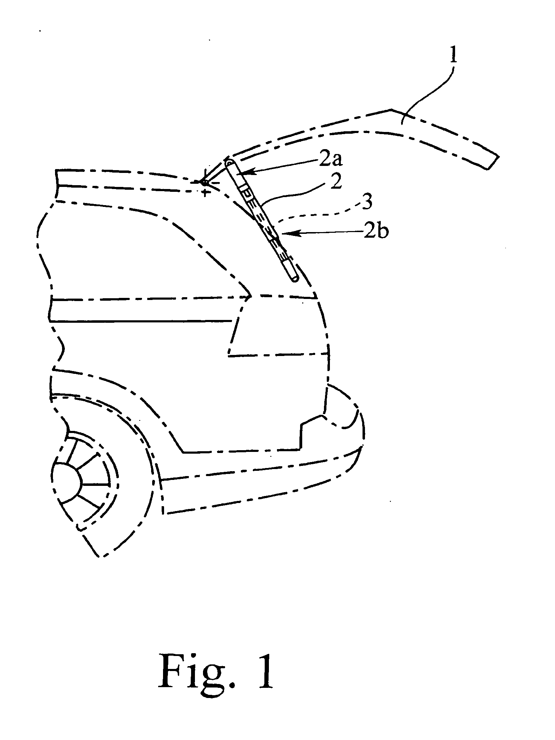

Die Antriebsanordnung ist mit zwei elektrischen Antrieben 2, 3 ausgestattet, von denen in Fig. 1 nur der vordere Antrieb 2 zu erkennen ist. Hinsichtlich einer bevorzugten Anordnung der Antriebe 2, 3 darf auf das deutsche Gebrauchsmuster DE 20 2007 005 749 U1 verwiesen werden, das auf die Anmelderin zurückgeht und das insoweit zum Gegenstand der vorliegenden Anmeldung gemacht wird.

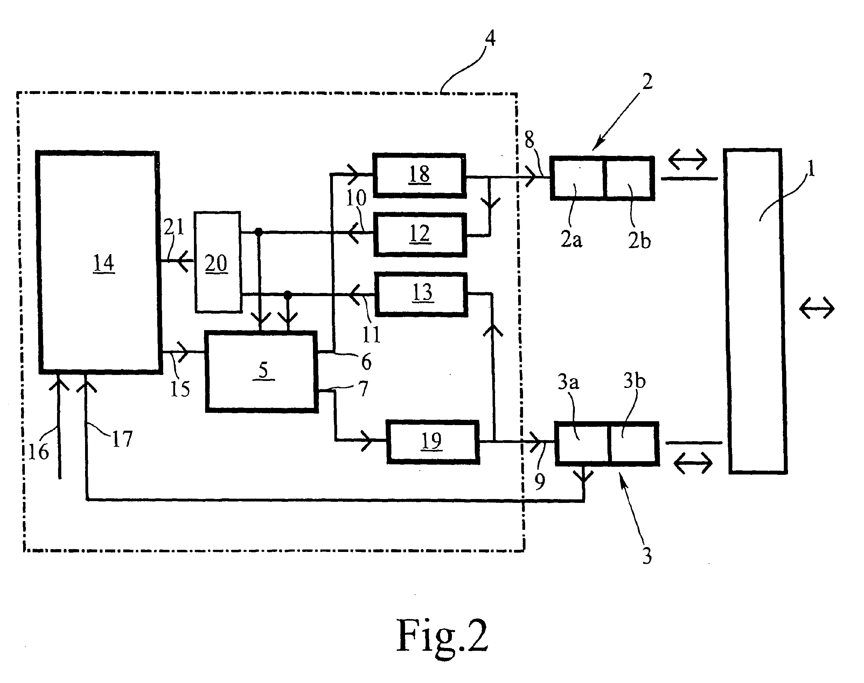

Die Antriebsanordnung ist ferner mit einer Steuerungseinrichtung 4 ausgestattet, die der Ansteuerung der beiden Antriebe 2, 3 dient. Die Steuerungseinrichtung 4 ist in Fig. 2 dargestellt. Sie kann als separate Einheit oder als Bestandteil einer zentralen Kraftfahrzeugelektronik realisiert sein. Denkbar ist auch eine dezentrale Ausgestaltung mit mehreren beispielsweise in den Antrieben 2, 3 verteilt angeordneten Steuerungsmodulen.

Die Antriebe 2, 3 wirken im montierten Zustand in gleicher Weise auf die Heckklappe 1. Beide Antriebe 2, 3 sind entsprechend so angeordnet, dass sie bei gleichen Antriebskräften gleiche Antriebsmomente auf beiden Randseiten in die Heckklappe einleiten. Ferner sind die Antriebe 2, 3 abgesehen von toleranzbedingten Abweichungen im wesentlichen identisch ausgestaltet. Die beiden letztgenannten Aspekte führen dazu, dass die beiden Antriebe 2, 3 bei unterstelltem Wegfall der obigen toleranzbedingten Abweichungen ohne irgendwelche Nachteile mit ein und derselben Antriebsspannung beaufschlagt werden können.

Allerdings wird hier davon ausgegangen, dass toleranzbedingte Abweichungen zwischen den Antrieben 2, 3 bestehen, die zu dem weiter oben erläuterten ungleichmäßigen Verschleiß der Antriebe 2, 3 führen. Aus diesem Grunde ist die Steuerungseinrichtung 4 mit einem Leistungsregler 5 ausgestattet, der im montierten Zustand die an die beiden Antriebe 2, 3 jeweils abgegebene elektrische Leistung zum Ausgleich der toleranzbedingten Abweichungen regelt, und zwar so, dass sich bei beiden Antrieben 2, 3 eine identische elektrische Leistungsaufnahme einstellt. Die vorschlagsgemässe Regelung ist insbesondere während der motorischen Verstellung der Heckklappe 1 vorgesehen. Denkbar ist aber auch, die vorschlagsgemässe Regelung während des Haltebetriebs, in dem die Heckklappe 1 durch entsprechendes Bestromen und Gegenbestromen der Antriebe 2, 3 in einer bestimmten Stellung gehalten wird, vorzusehen. Wie die vorschlagsgemässe Regelung im einzelnen erfolgen kann, wird weiter unten noch erläutert.

Der Begriff "Leistungsregler" ist vorliegend funktional zu verstehen. Es kommt also nicht darauf an, dass der Leistungsregler 5 als separate Einheit oder als separates Modul elektronisch oder softwaretechnisch realisiert ist. Wesentlich ist lediglich, dass die Funktion des Leistungsreglers 5 gewährleistet ist.

Die Antriebe 2, 3 sind jeweils mit einem elektrischen Antriebsmotor 2a, 3a und mit einem nachgeschalteten, noch zu erläuterndem Getriebe 2b, 3b ausgestattet. Bei den Antriebsmotoren 2a, 3a handelt es sich hier und vorzugsweise um Gleichstrommotoren.

Die Ansteuerung der Antriebsmotoren 2a, 3a erfolgt in besonders bevorzugter Ausgestaltung mit einer pulsweitenmodulierten (PWM-) Antriebsspannung. Damit lässt sich eine verlustarme Regelung eines Verstellvorgangs auf besonders einfache Weise realisieren.

Es wurde weiter oben schon erläutert, dass bei elektrischen Antriebsmotoren 2a, 3a toleranzbedingte Abweichungen auftreten, die insbesondere auf toleranzbedingte Unterschiede in den Motorkennlinien der Antriebsmotoren 2a, 3a zurückgehen. Dies führt zu dem oben genannten ungleichmäßigen Verschleiß.

Der ungleichmäßige Verschleiß macht sich besonders dann bemerkbar, wenn die Antriebe 2, 3 im montierten Zustand derart mit dem Verstellelement 1 gekoppelt sind, dass während einer motorischen Verstellung die Antriebsgeschwindigkeiten der beiden Antriebe 2, 3 zueinander stets identisch sind. Dies ist insbesondere dann der Fall, wenn das Verstellelement 1, hier die Heckklappe 1, starr ausgebildet ist und die Antriebe 2, 3 mit dem Verstellelement 1, hier mit der Heckklappe 1, bewegungsgekoppelt sind.

Bei einer Ansteuerung der beiden Antriebe 2, 3 mit einer identischen Antriebsspannung bedeutet die obige Kopplung der Antriebe 2, 3 mit der Heckklappe 1, dass die beiden Antriebe 2, 3 mit unterschiedlichen Antriebsmomenten bzw. - kräften auf die Heckklappe 1 wirken, was eben zu dem oben genannten, ungleichmäßigen Verschleiß führt.

Entsprechend ist es hier und vorzugsweise so, dass der Leistungsregler 5 jeweils einen Stellwert 6, 7 für die Antriebsspannungen 8, 9 der beiden Antriebe 2, 3 derart erzeugt, dass sich bei beiden Antrieben 2, 3 eine identische elektrische Leistungsaufnahme einstellt. Über die Einstellung der Antriebsspannungen 8, 9 beeinflusst der Leistungsregler 5 die von den beiden Antrieben 2, 3 aufgenommenen elektrischen Leistungen derart, dass sich die obige identische Leistungsaufnahme einstellt.

Es wird weiter unten noch erläutert, dass die Stellwerte 6, 7 abgesehen von einem gegebenenfalls vorgesehenen Proportionalitätsfaktor vorzugsweise identisch mit den Antriebsspannungen 8, 9 sind.

Die für die obige Leistungsregelung erforderliche Rückkopplung wird vorzugsweise durch eine Ermittlung der von den beiden Antrieben 2, 3 aufgenommenen Antriebsströme erzielt. Hierfür sind dem Leistungsregler 5 entsprechende Strom-Messeinrichtungen 12, 13 zugeordnet. Die Antriebsströme sind in Fig. 2 ausgangsseitig der Messeinrichtungen 12, 13 mit den Bezugszeichen 10, 11 dargestellt. Strenggenommen handelt es sich hierbei natürlich um die Messwerte zu den Antriebsströmen. Auf diese Unterscheidung wird vorliegend im Sinne einer einfachen Darstellung verzichtet.

Hier und vorzugsweise ermittelt der Leistungsregler 5 also basierend auf den aktuellen Antriebsströmen 10, 11 und den aktuellen Antriebsspannungen 8, 9 die Stellwerte für die "zukünftigen" Antriebsspannungen 8, 9. Vorzugsweise ermittelt der Leistungsregler 5 zunächst Werte für die beiden aktuellen an die Antriebe 2, 3 abgegebenen elektrischen Leistungen und erzeugt basierend auf der Differenz dieser Werte die Stellwerte für die beiden "zukünftigen" Antriebsspannungen 8, 9.

Mit der bis hierhin beschriebenen Anordnung lässt sich sicherstellen, dass sich bei beiden Antrieben 2, 3 stets eine identische elektrische Leistungsaufnahme einstellt.

Bei dem Betrieb der vorschlagsgemäßen Antriebsanordnung kommt es aber auch darauf an, die Höhe der an die beiden Antriebe 2, 3 insgesamt abgegebene Leistung beeinflussen zu können, beispielsweise, um eine Geschwindigkeitsregelung zu realisieren. Hierfür lässt sich der Leistungsregler 5 mit einem vorzugsweise von einem Bewegungsregler 14 erzeugten Stellwert 15 beaufschlagen.

Hier und vorzugsweise dient der Bewegungsregler 14 der Regelung der Verstellgeschwindigkeit der Heckklappe 1. Der Bewegungsregler 14 verarbeitet in üblicher Weise eine Führungsgröße 16 für eine Soll-Verstellgeschwindigkeit von einer übergeordneten Steuerung. Ferner wird der Bewegungsregler 14 im Sinne einer Rückkopplung mit einem gemessenen Wert für die aktuelle Verstellgeschwindigkeit 17 der Heckklappe 1 beaufschlagt. Schließlich erzeugt der Bewegungsregler 14 aus der Regeldifferenz zwischen der Führungsgröße 16 und der Verstellgeschwindigkeit 17 in ebenfalls an sich bekannter Weise einen Stellwert 15, der vorliegend auf den Leistungsregler 5 geschaltet ist.

Die aktuelle Verstellgeschwindigkeit 17 wird hier und vorzugsweise von der Antriebsgeschwindigkeit des in Fig. 2 unteren Antriebs 3 abgeleitet. Grundsätzlich ist es auch denkbar, die Verstellgeschwindigkeit 17 von einem unmittelbar an der Heckklappe 1 angeordneten Sensor abzuleiten.

Es sind nun unterschiedliche Möglichkeiten dafür denkbar, wie der Leistungsregler 5 basierend auf dem von dem Bewegungsregler 14 erzeugten Stellwert 15 die Stellwerte 6, 7 für die beiden Antriebsspannungen 8, 9 bei gleichzeitiger Realisierung der obigen identischen Leistungsaufnahme erzeugt.

Eine bevorzugte Variante besteht darin, dass der Leistungsregler 5 die Stellwerte 6, 7 für die Antriebsspannungen 8, 9 der beiden Antriebe 2, 3 derart erzeugt, dass der von dem Bewegungsregler 14 erzeugte Stellwert 15 stets dem Mittelwert aus den beiden Stellwerten 6, 7 für die Antriebsspannungen 8, 9 entspricht oder zu diesem Mittelwert proportional ist. Hier ist es also so, dass jede Veränderung der beiden Stellwerte 6, 7 für die Antriebsspannungen 8, 9 im Zuge der obigen Leistungsregelung stets "symmetrisch" zu dem von dem Bewegungsregler 14 erzeugten Stellwert 15 erfolgt.

Denkbar ist aber auch, dass der Leistungsregler 5 die Stellwerte 6, 7 für die Antriebsspannungen 8, 9 der beiden Antriebe 2, 3 derart erzeugt, dass einer der Stellwerte 6, 7 für die Antriebsspannungen 8, 9 dem von dem Bewegungsregler 14 erzeugten Stellwert 15 entspricht oder zu diesem Stellwert 15 proportional ist. In diesem Falle wird der von dem Bewegungsregler 14 erzeugte Stellwert 15 für einen der Stellwerte 6, 7 schlicht übernommen, so dass ausschließlich der jeweils andere Stellwert 7, 6 so nachgeregelt wird, dass sich bei den beiden Antrieben 2, 3 insgesamt wieder eine identische elektrische Leistungsaufnahme einstellt.

Es wurde weiter oben schon angesprochen, dass die beiden Stellwerte 6, 7 bis auf einen gegebenenfalls vorhandenen Proportionalitätsfaktor mit den Antriebsspannungen 8, 9 übereinstimmen. Dies liegt daran, dass die beiden von dem Leistungsregler 5 erzeugten Stellwerte 6, 7 lediglich auf die Antriebe 2, 3 bzw. auf den Antrieben 2, 3 vorgeschaltete Leistungstreiber 18, 19 geschaltet sind. Dies lässt sich der Darstellung in Fig. 2 entnehmen.

Bei dem dargestellten und insoweit bevorzugten Ausführungsbeispiel ist der Leistungsregler 5 selbst gewissermaßen Bestandteil einer dem Bewegungsregler 14 zugeordneten Regelstrecke, die in üblicher Weise mit dem Stellwert 15 des Bewegungsreglers 14 beaufschlagt wird. Dies muss aber nicht so sein. Beispielsweise kann der Leistungsregler 5 auch integraler Bestandteil eines Bewegungsreglers 14 sein.

Denkbar ist ferner, dass auf einen Bewegungsregler 14 vollständig verzichtet wird, beispielsweise, wenn eine reine Steuerung der Antriebe 2, 3 vorgesehen ist. Dann wird der auf den Leistungsregler 5 geschaltete "Stellwert" beispielsweise durch eine Benutzereingabe vorgegeben.

Der Vollständigkeit halber darf noch darauf hingewiesen werden, dass die Strom-Messeinrichtungen 12, 13 nicht nur auf den Leistungsregler 5, sondern auch auf eine Überstrom-Überwachungseinheit 20 geschaltet sind. Sollte einer der gemessenen Antriebsströme 10, 11 eine vorbestimmte Schwelle überschreiten, so gibt die Überstrom-Überwachungseinheit 20 ein entsprechendes Überstromsignal 21 an den Bewegungsregler 14. Dort wird durch Vorgabe eines entsprechenden Stellwertes 15 das Anhalten und/oder Bremsen der Heckklappe 1 ausgelöst.

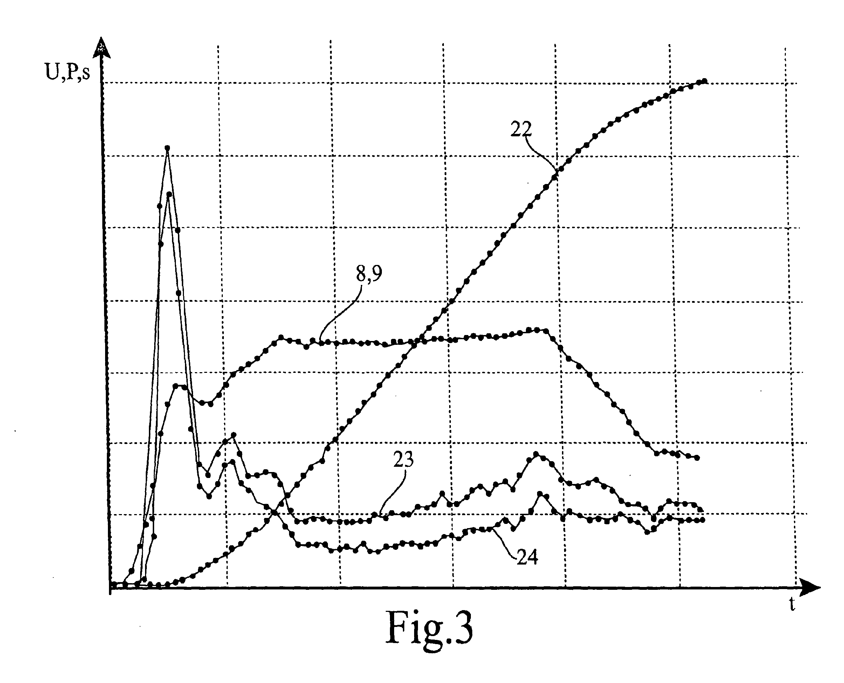

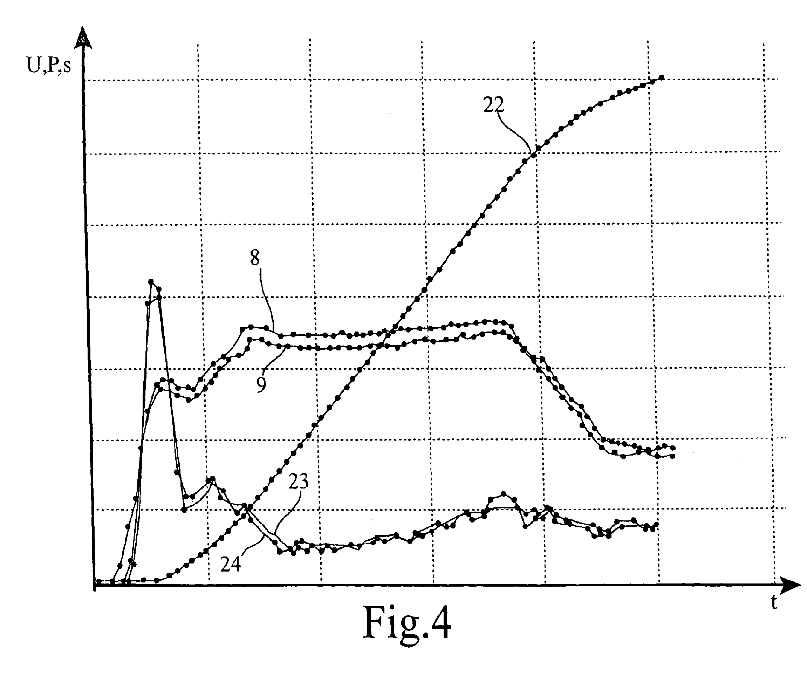

Zur Verdeutlichung der Funktionsweise des Leistungsreglers 5 darf auf die Fig. 3 und 4 hingewiesen werden.

Fig. 3 zeigt ein Zeitdiagramm während des Öffnens der Heckklappe 1 für eine Anordnung gemäß Fig. 2, bei der ein vorschlagsgemäßer Leistungsregler 5 allerdings nicht vorgesehen oder abgeschaltet ist. Der vom Bewegungsregler 14 erzeugte Stellwert 15 wird also direkt auf die beiden Leistungstreiber 18, 19 geschaltet.

Zu erkennen ist in Fig. 3 zunächst der Verlauf der Antriebsspannungen 8, 9, die dem vom Bewegungsregler 14 erzeugten Stellwert 15 entsprechen. Es lässt sich der Darstellung entnehmen, dass die Antriebsspannungen 8, 9 hier letztlich ein und dieselbe Antriebsspannung sind. Diese Antriebsspannung führt im Ergebnis zu dem Verstellweg 22.

Interessant ist bei dem in Fig. 3 dargestellten Zeitdiagramm die Tatsache, dass die von den beiden Antrieben 2, 3 aufgenommenen elektrischen Leistungen deutliche Unterschiede aufweisen. Diese Leistungen sind hier mit den Bezugszeichen 23, 24 versehen worden.

Fig. 4 zeigt ein Zeitdiagramm während des Öffnens der Heckklappe 1 für eine Anordnung gemäß Fig. 2 mit eingeschaltetem Leistungsregler 5. Die Darstellung in Fig. 4 entspricht der Darstellung in Fig. 3, wobei aufgrund unterschiedlicher Skalierungen eine Vergleichbarkeit der jeweiligen Absolutwerte zwischen den beiden Darstellungen nicht gegeben, zum Verständnis der Lehre aber auch nicht notwendig ist. Die Leistungen sind auch hier mit den Bezugszeichen 23, 24 versehen worden. Aus dieser Darstellung wird klar, dass die von den Antrieben 2, 3 aufgenommenen Leistungen 23, 24 während der Verstellung der Heckklappe 1 weitgehend identisch sind. Nun sind also sowohl die Antriebsspannungen 8, 9 als auch die Antriebsströme 10, 11 in weiten Bereichen unterschiedlich, die von den beiden Antrieben 2, 3 aufgenommenen Leistungen 23, 24 aber wie oben erläutert weitgehend identisch. Der oben angesprochene, ungleichmäßige Verschleiß tritt durch die Funktionalität des Leistungsreglers 5 nicht mehr auf.

Der Leistungsregler 5 kann auch in ganz anderer Hinsicht nützlich sein. Bei einer Antriebsanordnung mit zwei Antrieben 2, 3 besteht nämlich grundsätzlich die Gefahr, dass es im Antriebsstrang einer der beiden Antriebe 2, 3 zu Störungen kommt. Beispielsweise kann die antriebstechnische Kopplung eines der beiden Antriebe 2, 3 mit der Heckklappe 1 oder mit der Kraftfahrzeugkarosserie aufbrechen. Dies würde kurzfristig zu einem extremen Ungleichgewicht der von den Antrieben 2, 3 aufgenommenen elektrischen Leistungen führen, was ohne weiteres im Leistungsregler 5 detektierbar ist. Hier und vorzugsweise ist es daher vorgesehen, dass der Leistungsregler 5 bei Überschreiten einer vorbestimmten Grenzdifferenz zwischen den beiden aktuellen Leistungen ein entsprechendes Signal ausgibt und/oder in einen Not- und/oder Haltebetrieb umschaltet.

Es wurde schon angesprochen, dass die Antriebe 2, 3 vorzugsweise als Spindelantriebe ausgestaltet sind. Dabei ist es so, dass die Antriebe 2, 3 einen Antriebsmotor 2a, 3a und ein nachgeschaltetes Spindel-Spindelmutter-Getriebe 2b, 3b aufweisen. Die beiden Spindelantriebe 2, 3 sind dann, wie in Fig. 1 ansatzweise zu erkennen, an zwei gegenüberliegenden Randseiten der Heckklappe 1 angeordnet. Auf die in diesem Zusammenhang oben angesprochene DE 20 2007 005 749 U1 darf nochmals verwiesen werden.

Es wurde ebenfalls bereits darauf hingewiesen, dass die vorschlagsgemäße Lösung auf alle möglichen Arten von Verstellelementen in einem Kraftfahrzeug angewendet werden kann. Besonders bevorzugt ist hier die Ausgestaltung des Verstellelements 1 als Klappe, insbesondere als Heckklappe, oder als Tür, insbesondere als Schwenk- oder Schiebetür, oder als Ladeboden. Alle anderen in der Beschreibungseinleitung genannten Ausgestaltungen eines Verstellelements sind ebenfalls bevorzugt vorgesehen.

Nach einer weiteren Lehre, der eigenständige Bedeutung zukommt, wird eine Verstellelementanordnung in einem Kraftfahrzeug mit einem Verstellelement 1 und mit einer vorschlagsgemäßen Antriebsanordnung zur motorischen Verstellung des Verstellelements 1 beansprucht. Auf die obigen Ausführungen zu der vorschlagsgemäßen Antriebsanordnung darf in vollem Umfange verwiesen werden.

Nach einer weiteren Lehre, der ebenfalls eigenständige Bedeutung zukommt, wird ein Verfahren zur Ansteuerung einer vorschlagsgemäßen Antriebsanordnung beansprucht. Wesentlich ist hier, dass während der motorischen Verstellung des Verstellelements 1 die an die beiden Antriebe 2, 3 jeweils abgegebene elektrische Leistung zum Ausgleich der toleranzbedingten Abweichungen derart geregelt wird, dass sich bei beiden Antrieben 2, 3 eine identische Leistungsaufnahme einstellt. Auch im Zusammenhang mit dieser weiteren Lehre darf auf die Ausführungen zu der vorschlagsgemäßen Antriebsanordnung verwiesen werden, sofern diese geeignet sind, das beanspruchte Verfahren zu erläutern.

## Patentansprüche

1. Antriebsanordnung zur motorischen Verstellung eines Verstellelements (1) in einem Kraftfahrzeug, wobei die Antriebsanordnung zwei elektrische Antriebe (2, 3) und eine Steuerungseinrichtung (4) aufweist, wobei die Antriebe (2, 3) im montierten Zustand in gleicher Weise auf das Verstellelement (1) wirken und abgesehen von toleranzbedingten Abweichungen im wesentlichen identisch ausgestaltet sind und wobei die Antriebe (2, 3) im montierten Zustand derart mit dem Verstellelement (1) gekoppelt sind, dass während einer motorischen Verstellung die Antriebsgeschwindigkeiten der beiden Antriebe (2, 3) zueinander stets identisch sind,
**dadurch gekennzeichnet,**
**dass** die Steuerungseinrichtung (4) einen Leistungsregler (5) aufweist, der im montierten Zustand insbesondere während der motorischen Verstellung des Verstellelements (1) die an die beiden Antriebe (2, 3) jeweils abgegebene elektrische Leistung zum Ausgleich der toleranzbedingten Abweichungen derart regelt, dass sich bei beiden Antrieben (2, 3) eine identische elektrische Leistungsaufnahme einstellt.

2. Antriebsanordnung nach Anspruch 1, **dadurch gekennzeichnet, dass** die Antriebe (2, 3) jeweils einen elektrischen Antriebsmotor (2a, 3a), insbesondere einen Gleichstrommotor, aufweisen und dass die auszugleichenden Abweichungen zwischen den beiden Antrieben (2, 3) auf toleranzbedingte Unterschiede in den Motorkennlinien der Antriebsmotoren (2a, 3a) zurückgehen.

3. Antriebsanordnung nach einem der vorhergehenden Ansprüchen, **dadurch gekennzeichnet, dass** der Leistungsregler (5) jeweils einen Stellwerte (6, 7) für die Antriebsspannungen (8, 9) der beiden Antriebe (2, 3) derart erzeugt, dass sich bei beiden Antrieben 2, 3 eine identische elektrische Leistungsaufnahme einstellt.

4. Antriebsanordnung nach einem der vorhergehenden Ansprüchen, **dadurch gekennzeichnet, dass** dem Leistungsregler (5) zur Ermittlung der aktuell an die beiden Antriebe (2, 3) abgegebenen Antriebsströme (10, 11) entsprechende Strom-Messeinrichtungen (12, 13) zugeordnet sind.

5. Antriebsanordnung nach den Ansprüchen 3 und 4, **dadurch gekennzeichnet, dass** der Leistungsregler (5) basierend auf den aktuellen Antriebsströmen (10, 11) und den aktuellen Antriebsspannungen (8, 9) und ggf. weiteren Faktoren die Stellwerte (6, 7) für die beiden Antriebsspannungen (8, 9) erzeugt, vorzugsweise, dass der Leistungsregler (5) Werte für die beiden aktuell an die Antriebe (2, 3) abgegebenen Leistungen ermittelt und basierend auf der Differenz dieser Werte die Stellwerte (6, 7) für die beiden Antriebsspannungen (8, 9) erzeugt.

6. Antriebsanordnung nach einem der vorhergehenden Ansprüchen, **dadurch gekennzeichnet, dass** die Steuerungseinrichtung (4) einen Bewegungsregler (14) zur Regelung insbesondere der Verstellgeschwindigkeit des Verstellelements (1) umfasst, dem der Leistungsregler (5) nachgeschaltet ist, vorzugsweise, dass der Leistungsregler (5) basierend auf dem von dem Bewegungsregler (14) erzeugten Stellwert (15) die Stellwerte (6, 7) für die beiden Antriebsspannungen (8, 9) erzeugt.

7. Antriebsanordnung nach den Ansprüchen 3 und 6, **dadurch gekennzeichnet, dass** der Leistungsregler (5) die Stellwerte (6, 7) für die beiden Antriebsspannungen (8, 9) derart erzeugt, dass der von dem Bewegungsregler (14) erzeugte Stellwert (15) stets dem Mittelwert aus den beiden Stellwerten (6, 7) für die Antriebsspannungen (8, 9) entspricht oder zu diesem Mittelwert proportional ist.

8. Antriebsanordnung nach Anspruch 6 oder 7, **dadurch gekennzeichnet**, das der Leistungsregler (5) die Stellwerte (6, 7) für die Antriebsspannungen (8, 9) der beiden Antriebe (2, 3) derart erzeugt, dass einer der Stellwerte (6, 7) für die Antriebsspannungen (8, 9) dem von dem Bewegungsregler (14) erzeugten Stellwert (15) entspricht oder zu diesem Stellwert (15) proportional ist.

9. Antriebsanordnung nach Anspruch 3 und ggf. nach einem der Ansprüche 4 bis 8, **dadurch gekennzeichnet, dass** die beiden von dem Leistungsregler (5) erzeugten Stellwerte (6, 7) auf die Antriebe (2, 3) bzw. auf den Antrieben (2, 3) vorgeschaltete Leistungstreiber (18, 19) geschaltet sind.

10. Antriebsanordnung nach einem der vorhergehenden Ansprüchen, **dadurch gekennzeichnet, dass** der Leistungsregler (5) bei Überschreiten einer vorbestimmten Grenzdifferenz zwischen den beiden aktuellen Leistungen ein entsprechendes Signal ausgibt und ggf. in einen Not- und/oder Haltebetrieb umschaltet.

11. Antriebsanordnung nach einem der vorhergehenden Ansprüchen, **dadurch gekennzeichnet, dass** die Antriebe (2, 3) jeweils als Spindelantriebe ausgestaltet sind, vorzugsweise, dass die beiden Spindelantriebe an zwei gegenüberliegenden Randseiten des Verstellelements (1) angeordnet sind.

12. Antriebsanordnung nach einem der vorhergehenden Ansprüchen, **dadurch gekennzeichnet, dass** das Verstellelement (1) als Klappe, insbesondere als Heckklappe, oder als Tür, insbesondere als Schwenk- oder Schiebetür, oder als Ladeboden ausgestaltet ist.

13. Verstellelementanordnung in einem Kraftfahrzeug mit einem Verstellelement (1) und einer Antriebsanordnung nach Anspruch 1.

14. Verstellelementanordnung nach Anspruch 13, **gekennzeichnet durch** die Merkmale des kennzeichnenden Teils eines oder mehrerer der Ansprüche 2 bis 12.

15. Verfahren zur Ansteuerung einer Antriebsanordnung, die der motorischen Verstellung eines Verstellelements (1) in einem Kraftfahrzeug dient, wobei die Antriebsanordnung zwei elektrische Antriebe (2, 3) und eine Steuerungseinrichtung (4) aufweist, wobei die Antriebe (2, 3) im montierten Zustand in gleicher Weise auf das Verstellelement (1) wirken und abgesehen von toleranzbedingten Abweichungen im wesentlichen identisch ausgestaltet sind und wobei die Antriebe (2, 3) im montierten Zustand derart mit dem Verstellelement (1) gekoppelt sind, dass während einer motorischen Verstellung die Antriebesgeschwindigkeiten der beiden Antriebe (2, 3) zueinander stets identisch sind,
**dadurch gekennzeichnet,**
**dass** insbesondere während der motorischen Verstellung des Verstellelements (1) die an die beiden Antriebe (2, 3) jeweils abgegebene elektrische Leistung zum Ausgleich der toleranzbedingten Abweichungen derart geregelt wird, dass sich bei beiden Antrieben (2, 3) eine identische elektrische Leistungsaufnahme einstel lt.

## Claims

1. Drive arrangement for the motor-driven adjustment of an adjustable element (1) in a motor vehicle, the drive arrangement having two electrical drives (2, 3) and a control device (4), the drives (2, 3), in the fitted state, acting in the same way on the adjustable element (1) and having a substantially identical configuration, apart from tolerance-related discrepancies, and the drives (2, 3), in the fitted state, being coupled to the adjustable element (1) in such a way that the drive speeds of the two drives (2, 3) are always identical to one another during a motor-driven adjustment,
**characterized**
**in that** the control device (4) has a power controller (5) which, in the fitted state, in particular during the motor-driven adjustment of the adjustable element (1), subjects the electrical power that is output respectively to the two drives (2, 3) to closed-loop control, for the purpose of compensating for the tolerance-related discrepancies, in such a way that an identical electrical power consumption is established for both drives (2, 3).

2. Drive arrangement according to Claim 1, **characterized in that** the drives (2, 3) each have an electrical drive motor (2a, 3a), in particular a DC motor, and **in that** the discrepancies to be compensated for between the two drives (2, 3) can be attributed to tolerance-related differences in the motor characteristics of the drive motors (2a, 3a).

3. Drive arrangement according to one of the preceding claims, **characterized in that** the power controller (5) generates a respective manipulated variable (6, 7) for the drive voltages (8, 9) of the two drives (2, 3) such that an identical electrical power consumption is established for both drives (2, 3).

4. Drive arrangement according to one of the preceding claims, **characterized in that** appropriate current measurement devices (12, 13) are associated with the power controller (5) for determining the drive currents (10, 11) presently being output to the two drives (2, 3).

5. Drive arrangement according to Claims 3 and 4, **characterized in that** the power controller (5) generates the manipulated variables (6, 7) for the two drive voltages (8, 9) on the basis of the present drive currents (10, 11) and the present drive voltages (8, 9) and possibly further factors, preferably **in that** the power controller (5) determines values for the two powers presently being output to the drives (2, 3) and generates the manipulated variables (6, 7) for the two drive voltages (8, 9) on the basis of the difference between these values.

6. Drive arrangement according to one of the preceding claims, **characterized in that** the control device (4) comprises a movement controller (14) for the closed-loop control in particular of the adjustment speed of the adjustable element (1), with the power controller (5) connected downstream of said movement controller, preferably **in that** the power controller (5) generates the manipulated variables (6, 7) for the two drive voltages (8, 9) on the basis of the manipulated variable (15) generated by the movement controller (14).

7. Drive arrangement according to Claims 3 and 6, **characterized in that** the power controller (5) generates the manipulated variables (6, 7) for the two drive voltages (8, 9) in such a way that the manipulated variable (15) generated by the movement controller (14) always corresponds to the mean value of the two manipulated variables (6, 7) for the drive voltages (8, 9) or is proportional to this mean value.

8. Drive arrangement according to Claim 6 or 7, **characterized in that** the power controller (5) generates the manipulated variables (6, 7) for the drive voltages (8, 9) of the two drives (2, 3) in such a way that one of the manipulated variables (6, 7) for the drive voltages (8, 9) corresponds to the manipulated variable (15) generated by the movement controller (14) or is proportional to this manipulated variable (15).

9. Drive arrangement according to Claim 3 and possibly according to one of Claims 4 to 8, **characterized in that** the two manipulated variables (6, 7) generated by the power controller (5) are connected to the drives (2, 3) or to power drivers (18, 19) connected upstream of the drives (2, 3).

10. Drive arrangement according to one of the preceding claims, **characterized in that** the power controller (5) outputs a corresponding signal and possibly switches over to an emergency and/or holding mode in the event of a predetermined limit difference between the two present powers being exceeded.

11. Drive arrangement according to one of the preceding claims, **characterized in that** the drives (2, 3) are each configured in the form of spindle drives, preferably **in that** the two spindle drives are arranged on two opposite peripheral sides of the adjustable element (1).

12. Drive arrangement according to one of the preceding claims, **characterized in that** the adjustable element (1) is configured in the form of a gate, in particular a tailgate, or in the form of a door, in particular in the form of a hinged or sliding door, or in the form of a cargo floor.

13. Adjustable element arrangement in a motor vehicle with an adjustable element (1) and a drive arrangement according to Claim 1.

14. Adjustable element arrangement according to Claim 13, **characterized by** the features of the characterizing clause of one or more of Claims 2 to 12.

15. Method for driving a drive arrangement, which is used for the motor-driven adjustment of an adjustable element (1) in a motor vehicle, the drive arrangement having two electrical drives (2, 3) and a control device (4), the drives (2, 3), in the fitted state, acting in the same way on the adjustable element (1) and having a substantially identical configuration, apart from tolerance-related discrepancies, and the drives (2, 3), in the fitted state, being coupled to the adjustable element (1) in such a way that the drive speeds of the two drives (2, 3) are always identical to one another during a motor-driven adjustment,
**characterized**
**in that**, in particular during the motor-driven adjustment of the adjustable element (1), the electrical power that is output respectively to the two drives (2, 3) is subjected to closed-loop control, for the purpose of compensating for the tolerance-related discrepancies, in such a way that an identical electrical power consumption is established for both drives (2, 3).

## Revendications

1. Ensemble d'entraînement destiné à ajuster à l'aide d'un moteur un élément d'ajustement (1) d'un véhicule automobile,
l'ensemble d'entraînement présentant deux entraînements électriques (2, 3) et un dispositif de commande (4),
les entraînements (2, 3) agissant de même manière sur l'élément d'ajustement (1) lorsqu'ils sont montés et étant configurés de manière essentiellement identique, abstraction faite d'écarts provoqués par les tolérances,
les entraînements (2, 3) étant accouplés à l'élément d'ajustement (1) lorsqu'ils sont montés de telle sorte que pendant un ajustement par moteur, les vitesses d'entraînement des deux entraînements (2, 3) soient toujours identiques l'une à l'autre,
**caractérisé en ce que**
le dispositif de commande (4) présente un régulateur de puissance (5) qui, à l'état monté, régule l'élément d'ajustement (1) la puissance électrique délivrée à chacun des deux entraînements (2, 3), en particulier pendant leur ajustement à l'aide d'un moteur, de manière à compenser les écarts provoqués par les tolérances, de telle sorte que les puissances électriques consommées par les deux entraînements (2, 3) soient identiques.

2. Ensemble d'entraînement selon la revendication 1, **caractérisé en ce que** les entraînements (2, 3) présentent chacun un moteur électrique d'entraînement (2a, 3a) et en particulier un moteur à courant continu et **en ce que** les écarts à compenser entre les deux entraînements (2, 3) découlent de différences provoquées par des tolérances entre les lignes caractéristiques des moteurs d'entraînement (2a, 3a).

3. Ensemble d'entraînement selon l'une des revendications précédentes, **caractérisé en ce que** le régulateur de puissance (5) forme une valeur de réglage (6, 7) pour les tensions d'entraînement (8, 9) des deux entraînements (2, 3) de telle sorte que des puissances électriques consommées identiques s'établissent pour les deux entraînements (2, 3).

4. Ensemble d'entraînement selon l'une des revendications précédentes, **caractérisé en ce que** des dispositifs appropriés de mesure de courant (12, 13) sont associés au régulateur de puissance (5) pour déterminer les courants d'entraînement (10, 11) délivrés à chaque moment aux deux entraînements (2, 3).

5. Ensemble d'entraînement selon les revendications 3 et 4, **caractérisé en ce que** sur la base des courants d'entraînement (10, 11) effectifs, des tensions d'entraînement (8, 9) effectives et éventuellement d'autres facteurs, le régulateur de puissance (5) forme les valeurs de réglage (6, 7) des deux tensions d'entraînement (8, 9) par le fait que le régulateur de puissance (5) détermine des valeurs des deux puissances délivrées à tout instant aux entraînements (2, 3) et forme les valeurs de réglage (6, 7) pour les deux tensions d'entraînement (8, 9) sur la base de la différence entre ces valeurs.

6. Ensemble d'entraînement selon l'une des revendications précédentes, **caractérisé en ce que** le dispositif de commande (4) comporte un régulateur de déplacement (14) qui régule en particulier la vitesse d'ajustement de l'élément d'ajustement (1) et qui est raccordé en aval du régulateur de puissance (5), de préférence de telle sorte que le régulateur de puissance (5) forme les valeurs de réglage (6, 7) des deux tensions d'entraînement (8, 9) sur la base de la valeur de réglage (15) formée par le régulateur de déplacement (14).

7. Ensemble d'entraînement selon les revendications 3 et 6, **caractérisé en ce que** le régulateur de puissance (5) forme les valeurs de réglage (6, 7) des deux tensions d'entraînement (8, 9) de telle sorte que la valeur de réglage (15) formée par le régulateur de déplacement (14) corresponde toujours à la valeur moyenne des deux valeurs de réglage (6, 7) prévues pour les tensions d'entraînement (8, 9) ou soit proportionnelle à cette valeur moyenne.

8. Ensemble d'entraînement selon les revendications 6 ou 7, **caractérisé en ce que** le régulateur de puissance (5) forme les valeurs de réglage (6, 7) des tensions d'entraînement (8, 9) des deux entraînements (2, 3) de telle sorte que l'une des valeurs de réglage (6, 7) des tensions d'entraînement (8, 9) corresponde à la valeur de réglage (15) formée par le régulateur de déplacement (14) ou soit proportionnelle à cette valeur de réglage (15).

9. Ensemble d'entraînement selon la revendication 3 et éventuellement l'une des revendications 4 à 8, **caractérisé en ce que** les deux valeurs de réglage (6, 7) formées par le régulateur de puissance (5) sont appliquées sur les entraînements (2, 3) ou sur des pilotes de puissance (18, 19) raccordés en amont des entraînements (2, 3).

10. Ensemble d'entraînement selon l'une des revendications précédentes, **caractérisé en ce que** lorsqu'une différence limite pré-définie entre les deux puissances effectives est dépassée, le régulateur de puissance (5) délivre un signal correspondant et éventuellement commute en un fonctionnement de secours et/ou de maintien.

11. Ensemble d'entraînement selon l'une des revendications précédentes, **caractérisé en ce que** les entraînements (2, 3) sont chacun configurés comme entraînement à broche, et de préférence **en ce que** les deux entraînements à broche sont disposés sur deux bords latéraux opposés de l'élément d'ajustement (1).

12. Ensemble d'entraînement selon l'une des revendications précédentes, **caractérisé en ce que** l'élément d'ajustement (1) est configuré comme clapet, en particulier comme clapet arrière ou comme porte, en particulier comme porte pivotante ou coulissante, ou comme plancher de chargement.

13. Ensemble d'élément d'ajustement pour véhicule automobile, présentant un élément d'ajustement (1) et un ensemble d'entraînement selon la revendication 1.

14. Ensemble d'élément d'ajustement selon la revendication 13, **caractérisé par** les caractéristiques de la partie caractérisante d'une ou plusieurs des revendications 2 à 12.

15. Procédé de commande d'un ensemble d'entraînement qui sert à ajuster à l'aide d'un moteur un élément d'ajustement (1) d'un véhicule automobile, l'ensemble d'entraînement présentant deux entraînements électriques (2, 3) et un dispositif de commande (4),
les entraînements (2, 3) agissant de même manière sur l'élément d'ajustement (1) lorsqu'ils sont montés et étant configurés de manière essentiellement identique, abstraction faite d'écarts provoqués par les tolérances,
les entraînements (2, 3) étant accouplés à l'élément d'ajustement (1) lorsqu'ils sont montés de telle sorte que pendant un ajustement par moteur, les vitesses d'entraînement des deux entraînements (2, 3) soient toujours identiques l'une à l'autre,
**caractérisé en ce que**,
en particulier pendant l'ajustement à l'aide d'un moteur de l'élément d'ajustement (1), la puissance électrique délivrée à chacun des deux entraînements (2, 3) est regulée de manière à compenser les écarts provoqués par les tolérances, de telle sorte que les puissances électriques consommées par les deux entraînements (2, 3) soient identiques.
